# EUROPÄISCHE PATENTSCHRIFT

(11) **EP 2 135 788 B1**
(45) Veröffentlichungstag und Bekanntmachung des Hinweises auf die Patenterteilung: **29.08.2012**
(21) Anmeldenummer: 09008056.5
(22) Anmeldetag: 19.06.2009
(51) Int. Cl.: F16H 59/00, F16H 59/08, B62D 15/02

(54) **Kraftfahrzeug umfassend ein elektronisch schaltbares Automatikgetriebe sowie ein Park-Lenk-Assistenzsystem zum Unterstützen eines Einparkvorgangs**
Vehicle including an electronically switched automatic gearbox and parking-steering assist system to support the parking process
Véhicule automobile comprenant une commande automatique déclenchée électroniquement et système d'assistance au guidage du stationnement pour soutenir un processus de stationnement

(30) Priorität: 20.06.2008 DE 102008029348
(43) Veröffentlichungstag der Anmeldung: 23.12.2009
(73) Patentinhaber: Audi AG, 85045 Ingolstadt (DE)
(72) Erfinder: Kischkat, Ralf, Dr., 85057 Ingolstadt (DE)
(74) Vertreter: Thielmann, Frank

(56) Entgegenhaltungen:
- EP-A- 1 249 380
- DE-A1- 10 120 511
- DE-A1- 10 338 335
- DE-A1- 10 346 888
- DE-A1- 10 347 714
- DE-A1- 19 817 142
- DE-A1-102006 010 846
- US-A1- 2008 154 464

## Beschreibung

Die Erfindung betrifft ein Kraftfahrzeug umfassend ein elektronisch schaltbares Automatikgetriebe sowie ein Park-Lenk-Assistenzsystem zum Unterstützen eines Einparkvorgangs, umfassend eine Steuerungseinrichtung und einen oder mehrere das Fahrzeugumfeld erfassende Sensoren, mittels welchem Assistenzsystem das Fahrzeug bei Annäherung an ein Hindernis automatisch in den Stand bremsbar ist.

Das Einparken in Parklücken bereitet vielen Fahrern Schwierigkeiten, insbesondere, wenn die Parklücke relativ klein bzw. das Auto relativ groß ist. Um den Fahrer hierbei zu unterstützen, wurden Park-Lenk-Assistenzsysteme entwickelt, die dem Fahrer das Einparken erleichtern sollen. Solche Assistenzsysteme umfassen eine Steuerung und eine oder mehrere das Fahrzeugumfeld erfassende Sensoren, beispielsweise Ultraschall- oder Radarsensoren oder auch eine Kamera. Ausgehend von dieser Umfelderfassung ist das Assistenzsystem sodann in der Lage, selbsttätig das Kraftfahrzeug in die Parklücke zu bewegen, das heißt, der Fahrer muss hierbei weder selbst lenken, noch Gas geben oder bremsen. Lediglich zum Inbewegungsetzen muss der Fahrer in der Regel kurz das Fahrpedal betätigen, d. h., dass er hierüber willentlich in den automatischen Vorgang eingebunden ist.. Das Assistenzsystem führt das Fahrzeug selbst, nimmt also die benötigte Beschleunigung vor und bremst das Fahrzeug auch automatisch in den Stand, wenn es sich einem Hindernis, beispielsweise einem die Parklücke begrenzenden anderen Kraftfahrzeug, nähert. Dies stellt eine beachtliche Unterstützung für den Fahrer dar.

Teilweise ist es jedoch erforderlich oder sinnvoll, während des Einparkvorgangs die Fahrtrichtung zu wechseln. Das heißt, dass aufgrund der gegebenen Fahrzeuggeometrie oder Größe der Parklücke ein Rangieren erforderlich ist, bei dem das Fahrzeug mehrfach die Fahrtrichtung wechselt, also mehrfach rückwärts und vorwärts fährt, um optimal in die Parklücke zu gelangen. In diesem Fall muss der Fahrer nach dem selbsttätigen Abbremsen des Fahrzeugs, das beispielsweise in einer ersten automatischen Bewegung rückwärts in die Parklücke gefahren ist und selbstständig abgebremst wurde, die Fahrtrichtung wechseln, wozu er das elektronisch schaltbare Automatikgetriebe umschalten muss. Hierzu muss er den Schalthebel beispielsweise in die D-Stellung bewegen, also eine Vorwärtsfahrstufe einlegen. Das Assistenzsystem kann sodann wieder das Fahrzeug automatisch führen, bis das Fahrzeug beispielsweise erneut maximal an ein die Parklücke nach vorne begrenzendes Fahrzeug herangefahren ist. Nach dem automatischen Abbremsen kann ein weiterer Rangiervorgang erforderlich sein, den der Fahrer wiederum dadurch einleiten muss, dass er manuell den Wählhebel in diesem Fall auf die R-Position zum Anwählen der Rückwärtsfahrstufe bewegt und kurz das Fahrpedal zur Gabe des Anfahrsignals betätigt. Das heißt, dass letztlich der Fahrer in der Regel - in den seltensten Fällen kann eine Parklücke durch einen einzigen rückwärts gerichteten Einparkvorgang optimal ausgefüllt werden - während des Einparkvorgangs manuell aktiv eingreifen, auch wenn der Einparkvorgang automatisch unterstützt wird. Dies führt zu Komforteinbußen infolge der erforderlichen manuellen Mithilfe, ferner zu Zeitverlusten, da sich der Einparkvorgang hierdurch verlängert. Ein völlig autonomes, das heißt fahrerunabhängiges Einparken ist also nicht möglich, das heißt, dass der Fahrer stets den Schalthebel in die richtige Position bringen muss.

Aus der DE 101 17 650 A1 ist ein Verfahren zum Verbringen eines Kraftfahrzeugs in eine Zielposition bekannt, das vollautomatisch und fahrerunabhängig in die Zielposition fährt. Der Fahrer kann den Einparkvorgang auch außerhalb des Kraftfahrzeugs durchführen lassen, indem eine Park- oder Rangiertaste an einer Sendeeinrichtung gedrückt gehalten wird. Alle Park- oder Rangiervorgänge werden dabei durch das Kraftfahrzeug selbständig vorgenommen, solange die Sendeinrichtung gedrückt bleibt. Wird die Sendeeinrichtung nicht mehr betätigt, wird der automatische Einparkvorgang sofort abgebrochen.

Die DE 10 2004 051 963 A1 betrifft ein Verfahren zur Fahrerunterstützung, bei dem ein Fahrerassistenzsystem entweder bestimmte Handlungen erst nach einer Bestätigung durch den Fahrer vornimmt oder bis zu einem Abbruchsignal automatisch arbeitet. In Bezug auf ein Einparksystem ist offenbart, dass dieses vollautomatisch funktioniert oder nur die Lenkung vornimmt. Im letztgenannten Fall gibt der Fahrer selbst Gas, bremst und legt den Gang ein. In allen Fällen kann der Fahrer korrigierend eingreifen, indem er den motorisch eingestellten Lenkwinkel über eine Betätigung des Lenkrades ändert. Der vollautomatische Betrieb selbst, insbesondere hinsichtlich eines Gangwechsels im Falle eines Rangiervorgangs, ist in DE 10 2004 017 963 A1 nicht im Detail beschrieben.

Die DE 100 37 128 A1 betrifft ein Verfahren und eine Einrichtung zur kameraunterstützten Einsichtnahme des Fahrweges. Bei diesem Verfahren wird der optische Blickwinkel einer am Kraftfahrzeug angebrachten Kamera automatisch eingestellt, um etwaige Hindernisse zu erfassen. Im Fall der Erfassung eines Hindernisses kann ein korrigierender Lenkradeingriff oder auch ein automatischer Bremseingriff vorgenommen werden. Diese Eingriffe lassen sich auch abschalten.

Die DE 10120511 betrifft ein verfahren und eine vorrichtung zum teilweise automatischen Parken eines Fahrzeugs. Der Fahrer veranlaβt von auβen ein Bremsen des Fahrzeugs bis zum stillstand.

Der Erfindung liegt damit das Problem zugrunde, ein Kraftfahrzeug anzugeben, das den Fahrer während eines automatischen Einparkvorgangs noch besser unterstützt.

Zur Lösung dieses Problems ist bei einem Kraftfahrzeug der eingangs genannten Art erfindungsgemäß vorgesehen, dass während eines über das Assistenzsystem unterstützten Einparkvorgangs das Signal zum Schalten des Automatikgetriebes von einer Vorwärtsfahrstufe in eine Rückwärtsfahrstufe oder umgekehrt nach dem automatischen Bremsen in den Stand über das Fahr- oder Bremspedal, über eine Spracheingabe in ein Sprachsteuerungssystem oder durch Betätigen eines lenkrad- oder armaturenbrett- oder schlüsselseitigen Bedienelements gebbar ist, woraufhin nach Einlegen der Fahrstufe der automatische Einparkvorgang fortgesetzt wird.

Der Erfindung liegt zugrunde, dass bei einem elektronisch geschalteten Automatikgetriebe kein Zwang gegeben ist, das elektrische Schaltsignal zum Schalten des Getriebes zwingend von dem hierfür vorgesehenen Schalthebel bzw. Wählhebel zu geben. Vielmehr kommt es bei einem solchen Shift-by-Wire-System lediglich darauf an, ein entsprechend Signal zu erzeugen. Womit bzw. wo das Signal erzeugt wird, spielt letztlich keine Rolle. Bei dem erfindungsgemäßen Kraftfahrzeug wird nun, wenn das Park-Lenk-Assistenzsystem aktiv ist und ein automatischer Einparkvorgang erfolgen soll, ein ansonsten einem anderen Zweck dienendes, fahrzeugseitig vorgesehenes Element in seiner Funktion dahingehend modifiziert bzw. konfiguriert, dass über dieses Element das Schaltsignal zum Wechseln der Fahrstufe gegeben werden kann. Dies ist ohne weiteres möglich, nachdem üblicherweise in Kraftfahrzeugen ein zentraler Signal- oder Datenbus, häufig der CAN-Bus, vorgesehen ist, über den sämtliche Signale respektive Daten ausgetauscht werden. Infolgedessen ist es ohne weiteres möglich, ein einem völlig anderen Zweck dienendes Element im automatischen Einpark-Modus zur Schaltsignalgabe "umzukonfigurieren". Ein solches Element kann beispielsweise das Fahr- oder das Bremspedal sein, also zwei Elemente, die - nachdem das Fahrzeug wie beschrieben in dieser Situation bereits automatisch in den Stand gebremst wurde - im Moment keine Funktion haben und ohne weiteres hierfür verwendet werden können. Denkbar ist auch die Nutzung eines Sprachsteuerungssystems, das heißt, dass hier die Signalgabe nach einer Spracheingabe über den Fahrer erfolgt. Eine dritte Möglichkeit sieht vor, hierfür ein lenkrad- oder armaturenbrett- oder schlüsselseitiges Bedienelement zu nutzen.

Erfindungsgemäß ist das Umschalten des Getriebes durch eine einfache quittierende Handlung realisiert. Der eigentliche Anfahrvorgang nach dem Umschalten kann entweder eine weitere willentliche Handlung des Fahrers erfordern, z. B. eine (gegebenenfalls erneute) kurze Betätigung des Fahrpedals, woraufhin sich das Fahrzeug erst in Bewegung setzt. Idealerweise aber kann die Handlung zur Erzeugung des Schaltsignals gleich als willentliche Handlung zum Inbewegungsetzen des Fahrzeugs interpretiert werden, z. B. wenn das Schaltsignal durch kurze Betätigung des Fahrpedals gegeben wird. Der willentlichen Handlung zur Gabe des Schaltsignals kann also eine zweite willentliche Handlung zum Anfangen folgen, oder der Handlung zur Schaltsignalgabe kommt quasi eine Doppelfunktion (Schaltsignal + Anfahrsignal) zu. Bei Vorhandensein einer hinreichen fehlerfrei arbeitenden Sensorik ist es grundsätz-lich denkbar, auch ohne Gabe eines separaten Anfahrsignals zu arbeiten, wenn das Schaltsignal nicht als ein solches interpretiert wird.

Für den Fahrer hat dies den beachtlichen Vorteil, dass er nicht wie bisher eine ganz bestimmte Fahrstufe, nämlich die D- oder R-Fahrstufe anwählen muss, wofür er extra seine Aufmerksamkeit dem Schalthebel zuwenden muss, damit er auch tatsächlich die richtige benötigte Fahrstufe einlegt. Vielmehr ist hier lediglich die Gabe eines Signals erforderlich, um ein lediglich einen Schaltvorgang anzeigendes Signal zu geben ist. Denn in diesem Automatikmodus kann - ausgehend von der momentan eingelegten Fahrstufe - nur eine einzige andere Fahrstufe sinnvoller Weise und zulässigerweise eingelegt werden, weshalb ein dezidiertes, konkret diese Fahrstufe angebendes Signal nicht erforderlich ist, sondern lediglich ein ganz allgemeines, den Schaltvorgang initiierendes Signal. Befindet sich also das Automatikgetriebe in der R-Fahrstufe, so kann zum Wechseln der Fahrtrichtung ausschließlich die D-Fahrstufe eingelegt werden, was beispielsweise durch entsprechende Konfiguration des dem Assistenzsystem eigenen Steuerprogramms möglich ist. Im umgekehrten Fall, wenn das Getriebe in der D-Fahrstufe ist, kann nur die R-Fahrstufe eingelegt werden.

Insbesondere die Verwendung des Fahr- oder Bremspedals ist dahingehend von Vorteil, als der Fahrer hierfür seine Aufmerksamkeit von dem, was er gerade macht, überhaupt nicht abwenden muss, nachdem es für ihn ein leichtes ist, das eine oder das andere Pedal zur Signalgabe zu betätigen. Entsprechendes gilt für eine Spracheingabe. Auch das Betätigen eines Bedienelements ist für ihn sehr einfach, nachdem er hierbei gerade nicht aufpassen muss, eine bestimmte vorgegebene Position anzuwenden, es ist vielmehr ausreichend, lediglich dieses Bedienelement, beispielsweise eine Lenkradtaste oder ein Scrollrad oder dergleichen, zu betätigen. Das heißt, dass der Fahrtrichtungswechsel für den Fahrer wesentlich einfacher einzuleiten ist. Auch kann der Einparkvorgang deutlich schneller vonstatten gehen als bisher. Schließlich wird hierüber auch ein vollständig autonomes Einparken ermöglicht, nachdem sich der Fahrer während des gesamten Einparkvorgangs etwas völlig anderem widmen kann, wobei hier sogar die Möglichkeit besteht, das Fahrzeug, ohne dass sich der Fahrer im Fahrzeug befindet, automatisch einparken zu lassen, wenn nämlich ein schlüsselseitiges Bedienelement genutzt wird, um das Schaltsignal zu geben. Der Fahrer kann, nachdem er den automatischen Park-Lenk-Modus angewählt hat, das Fahrzeug verlassen und den Vorgang neben dem Fahrzeug stehend beobachten. Sobald das Fahrzeug automatisch in den Stand gebremst wurde, muss er lediglich das Bedienelement am Schlüssel betätigen, um das Getriebe zu schalten, wonach der automatische Einparkvorgang in die andere Richtung fortgesetzt wird. Ein völlig automatisches Einparken ist damit ohne weiteres möglich. Der Fahrer veranlasst z. B. jeden erforderlichen Fahrtrichtungswechsel und den zugehörigen Anfahrvorgang durch Quittierung z. B. durch Druck auf einen Knopf am Zündschlüssel. Um die Sicherheit durch die Eingriffsmöglichkeiten des Fahrers immer sicherzustellen, kann sich das Fahrzeug z. B. nur während des Drückens einer Taste auf dem Zündschlüssel bewegen. Sobald er loslässt, bleibt das Fahrzeug stehen. Der Fahrtrichtungswechsel entsteht dann nach dem automatischen Abbremsvorgangs bei Annäherung an ein Hindernis durch erneuten Tastendruck (und wird evtl. über LEDs am Schlüssel angezeigt).

Wird das Schaltsignal über das Fahrpedal gegeben, so kann erfindungsgemäß das Fahrpedal zur Gabe des Schaltsignals um einen vorbestimmten Wegabschnitt zu bewegen und/oder ein vorbestimmtes Zeitintervall aus seiner Neutralstellung herausbewegt gehalten werden. Das Fahrpedal ist in seiner eigentlichen Funktion während des automatischen Einparkmodus entkoppelt, das heißt, dass der Fahrer trotz Betätigen des Pedals die Fahrgeschwindigkeit nicht verändern kann. Infolgedessen ist es möglich, das Fahrpedal zur Signalgabe zu nutzen. Hierbei muss der Fahrer das Fahrpedal beispielsweise um mindestens 10° verschwenken und/oder das Fahrpedal in dieser oder einer grundsätzlich verschwenkten Stellung für wenigstens zwei Sekunden oder länger halten. Die Pedalbewegung wird erfasst, aus der Art erfolgt dann die Ableitung des etwaigen Schaltsignals. Dies ist für den Fahrer ein sehr einfacher Vorgang, da er es aus dem üblichen Fahrbetrieb gewohnt ist, das Fahrpedal zu betätigen, weshalb es für ihn keinerlei Umstellung bedeutet, hierüber auch das Schaltsignal im Park-Lenk-Automatikmodus zu geben. Statt einer vollständigen Entkopplung ist auch eine "Teilentkopplung" denkbar. Hierbei wird das sog. "Übertreten" des Fahrpedals zugelassen, was es ermöglicht, dass das Fahrzeug bei länger dauernder Fahrpedalbetätigung oberhalb einer vorbestimmten Verschwenkschwelle langsam beschleunigt und unter bestimmten Bedingungen und einer entsprechenden Fahrerinformation den Einparkmodus verlässt. Der Fahrer kann also langsam Anfahren, wenn dies die Situation bedingt (z.B. möchte der Fahrer doch nicht Einparken) und verlässt ohne dass er hierzu eine besondere Handlung vornehmen muss, automatisch den Einparkmodus. Werden die definierten Bedingungen nicht erfüllt, verbleibt er im Einparkmodus, der aber infolge der Fahrpedalbetätigung gegebenenfalls mit etwas höherer Geschwindigkeit ausgeführt wird. Die Geschwindigkeitserhöhung kann z.B. abhängig vom Grad der Pedalverschwenkung abhängig sein, oder auch als fester Parameter eingestellt sein.

Wird das Schaltsignal über das Bremspedal gegeben, so kann das Bremspedal zur Gabe desselben um einen vorbestimmten Wegabschnitt zu bewegen und/oder ein vorbestimmtes Zeitintervall aus seiner Neutralstellung herausbewegt gehalten werden, wobei der Einparkvorgang nach Lösen des Bremspedals fortgesetzt wird. Das Bremspedal, das aus Sicherheitsgründen während des automatischen Einparkmodus nicht aus seiner eigentlichen Funktion entkoppelt wird, kann im Automatikmodus ohne weiteres zur Signalgabe verwendet werden, nachdem dieses Schaltsignal nur dann benötigt wird, wenn das Fahrzeug ohnehin automatisch in den Stand gebremst wurde. Der Fahrer muss nun lediglich das Bremspedal betätigen, beispielsweise um einen vorbestimmten Schwenkwinkel (z.B. 10°) und/oder für ein vorbestimmtes Zeitintervall aus der Neutralstellung herausbewegt halten, wonach die Signalgabe erfolgt. Auch dieses Handeln ist, nachdem das Bremspedal während des üblichen Fahrbetriebs zu betätigen ist, für den Fachmann einfach und intuitiv.

Ähnlich einfach und intuitiv ist die Gabe des Schaltsignals über ein Sprachsteuerungssystem, wobei erfindungsgemäß das Sprachsteuerungssystem mit Inbetriebnahme des Assistenzsystem automatisch aktivierbar ist. Das heißt, dass der Fahrer das Sprachsteuerungssystem nicht extra zuschalten muss, wenn er in den automatischen Einpark-Modus wechselt. Vielmehr wird das Sprachsteuerungssystem automatisch zugeschaltet, es ist dann Teil des Assistenzsystems beziehungsweise diesem zugeordnet. Gegebenenfalls kann die Aktivierung des Sprachsteuerungssystems in einem Kombiinstrument angezeigt werden. Der Fahrer muss sodann zum Richtungswechsel - gegebenenfalls nach vorheriger Anfrage über das Sprachsteuerungssystem beziehungsweise die fahrzeugseitige Lautsprechangabe, ob ein Richtungswechsel gewünscht wird - lediglich eine Bestätigungsantwort geben. Fragt beispielsweise das Sprachsteuerungssystem beziehungsweise das Assistenzsystem "Richtungswechsel?", so muss der Fahrer lediglich mit "ja" antworten oder er gibt eine aktive Anweisung wie "vorwärts"/"rückwärts".

Wird das Schaltsignal in einer weiteren Alternativausgestaltung über ein lenkrad- oder armaturenbrettseitiges Bedienelement gegeben, so wird als ein solches zweckmäßigerweise eine Taste, ein Knopf, ein Scrollrad oder ein Berührungsfeld verwendet, das mit Inbetriebnahme des Assistenzsystems in seiner Funktionalität zur Signalgabe umgeschaltet wird. Diese Umschaltung erfolgt über die Steuerungseinrichtung des Assistenzsystems, was - gegebenenfalls in Verbindung mit dem Steuergerät, dem das Bedienelement originär zugeordnet ist - über den Fahrzeugbus ohne weiteres möglich ist. Legt nun nach der Umschaltung das entsprechende Bedienelement nach seiner Betätigung ein Signal auf den Fahrzeugbus, so wird dieses Signal automatisch von dem jeweils eingebundenen Steuergerät respektive dem Automatikgetriebe als Schaltsignal erkannt.

Wird schließlich das Schaltsignal über ein schlüsselseitiges Bedienelement gegeben, so dient hierfür ein am Schlüssel vorgesehener Knopf, ein Berührungsfeld oder eine Taste, das oder die in seiner Funktionalität mit Inbetriebnahme des Assistenzsystems zur Signalgabe umgeschaltet wird. Üblicherweise haben moderne Fahrzeugschlüssel eine Taste, über die das Fahrzeug mit der Zentralverriegelung geöffnet oder geschlossen werden kann, mitunter auch eine Taste zum Öffnen des Kofferraums. Diese Taste kann nun entsprechend in ihrer Funktionalität umgeschaltet werden, so dass bei ihrer Betätigung nicht mehr das Fahrzeug verschlossen oder geöffnet wird, sondern das Schaltsignal gegeben wird.

Um den Fahrer davon in Kenntnis zu setzen, dass er ein Schaltsignal geben muss, wird ihm zweckmäßigerweise ein optisches und/oder akustisches und/oder haptisches Informationssignal automatisch mit dem Bremsen in den Stand bei noch nicht abgeschlossenem Einparkvorgang gegeben. Bevorzugt wird ein akustisches Signal verwendet, das der Fahrer sofort wahrnimmt wenn er im Fahrzeug sitzt. Auch ein haptisches Signal (z.B. ein Vibrationssignal am Lenkrad oder am Fahrersitz oder gegebenenfalls am Fahrzeugschlüssel, wenn das schlüsselseitige Bedienelement zur Signalgabe genutzt wird) kann den Fahrer ohne weiteres informieren. Ein optisches Signal kann beispielsweise über eine Blinkleuchte am Kombiinstrument gegeben werden, oder eine Blinkanzeige an einem Kombiinstrument, oder das Zuschalten beziehungsweise Blinken der Fahrzeuginnenbeleuchtung.

Eine vorteilhafte Weiterbildung der Erfindung sieht vor, nach Beendigung des Einparkvorgangs seitens des Assistenzsystems automatisch, gegebenenfalls nach vorheriger Gabe eines Bestätigungssignals durch den Fahrer, ein Schaltsignal zum Einlegen der Parkstufe (Getriebeposition P) zu erzeugen. Das heißt, dass mit Abschluss des Einparkvorgangs bevorzugt vollautomatisch auch die P-Fahrstufe eingelegt und das Fahrzeug gegen ein Wegrollen gesichert wird. Das Einlegen der Parkstufe kann gegebenenfalls in Abhängigkeit einer Überprüfung der Fahrgeschwindigkeit erfolgen. Die Parkstufe wird nur eingelegt, wenn das Fahrzeug definitiv steht. Option ist auch eine Überprüfung hinsichtlich des Vorhandenseins des Zündschlüssels im Fahrzeug respektive im Zündschloss möglich. Es wird also überprüft, ob der Schlüssel nicht im Schloss beziehungsweise im Fahrzeug ist. Liegt zu diesem Zeitpunkt ein Schaltsignal und ein Anfahrsignal vor, so kann, wenn der Zündschlüssel nicht mehr erkannt wird, die P-Stufe automatisch eingelegt werden, oder das Fahrzeug setzt sich nicht in Bewegung. Wird die Parkstufe automatisch eingelegt, so kann dem Fahrer ein dies anzeigendes optisches und/oder akustisches Informationssignal gegeben werden, so dass er Sicherheit dahingehend hat, dass das Fahrzeug tatsächlich aktiv gegen Wegrollen gesichert ist. Alternativ ist auch das automatische Betätigen einer elektrischen Handbremse denkbar, um das Fahrzeug zu sichern. Das Einlegen der Parkstufe oder das Anziehen der elektrischen Handbremse kann auch in Abhängigkeit der Ergebnisse einer Innenraumüberwachung z. B. mittels einer Kamera oder einer Sitzbelegungserkennung erfolgen.

Wenn das Fahrzeug während eines mehrzügigen Einparkvorgangs nach Erreichen der Begrenzung bis zum Stillstand abgebremst hat und auf die Quittierung des Fahrers, also der Signalgabe, wartet, um die Getriebeposition zu ändern und sich dann wieder in Bewegung zu setzen, könnte es sein, dass die Quittierung für eine bestimmte Zeit ausbleibt. Erfolgt diese also unzulässig lang nicht, ist es möglich, dass das Getriebe in diesem Fall ebenfalls in die Stellung N oder vorzugsweise P wechselt. Ein Wechsel nach P oder das Anziehen der elektrischen Handbremse ist ebenso sinnvoll, wenn der Fahrer das Fahrzeug verlässt.

Weitere Vorteile, Merkmale und Einzelheiten der Erfindung ergeben sich aus den im Folgenden Ausführungsbeispielen sowie anhand der Zeichnungen. Dabei zeigen:
- Fig. 1: ein erfindungsgemäßes Kraftfahrzeug, und
- Fig. 2: ein Beispiel für einen automatischen Einparkvorgang.

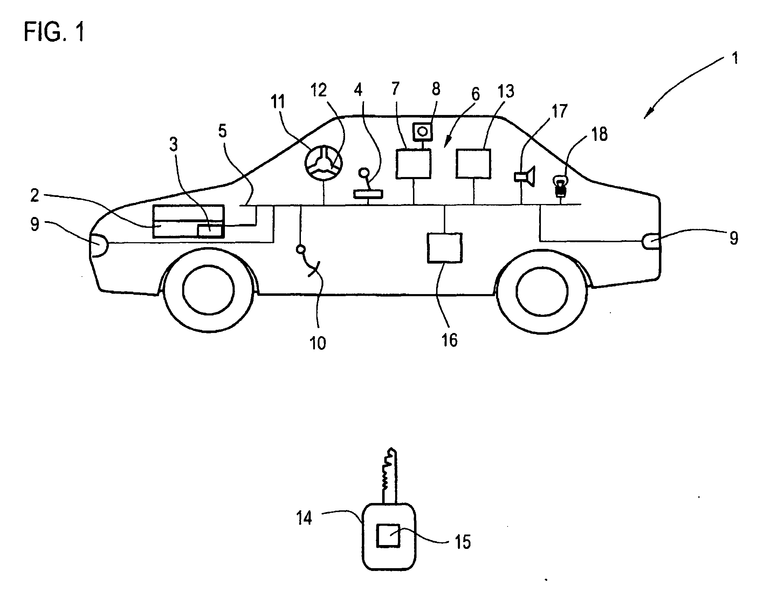

Fig. 1 zeigt ein erfindungsgemäßes Kraftfahrzeug 1, umfassend ein Automatikgetriebe 2, das über ein Getriebesteuergerät 3 geschaltet wird. Der Schaltvorgang erfolgt elektronisch, das heißt, über einen Wähl- oder Schalthebel 4 wird lediglich ein elektronisches Signal auf einen Fahrzeugbus 5, üblicherweise den CAN-Bus gelegt, welches Schaltsignal seitens des Getriebesteuergeräts 3, dem Fahrerwunsch, der über dieses Schaltsignal ausgedrückt wird, entsprechend, umgesetzt wird und das Getriebe 2 entsprechend geschaltet wird.

Das Kraftfahrzeug 1 umfasst ein Lenk-Park-Assistenzsystem 6, umfassend eine Steuerungseinrichtung 7 und ein zugeordnetes Bedienelement 8 (z.B. Taste), um das Assistenzsystem 6 zu- oder abzuschalten. Auch dieses kommuniziert über den Fahrzeugbus 5. Das Assistenzsystem 6 umfasst ferner diverse Sensoren 9, die hier lediglich exemplarisch an der Fahrzeugfront und am Fahrzeugheck vorgesehen sind. Beispielsweise handelt es sich hier um Ultraschallsensoren, die eine Annäherung an ein Hindernis erfassen können, was bei einem automatischen Einparkvorgang erforderlich ist.

Dieses Assistenzsystem 6 ist in der Lage, vollautomatisch einen Einparkvorgang zu steuern, derart, dass der Fahrer selbst nicht mehr zum Lenken, Beschleunigen oder Bremsen aktiv werden muss. Der Fahrer muss lediglich dann aktiv werden, wenn die Ist-Situation das Erreichen der optimalen Parkposition durch einen einmaligen Rückwärts- oder Vorwärtsfahrvorgang nicht zulässt, wenn also ein ein- oder mehrfaches Rangieren erforderlich ist. In diesem Fall muss der Fahrer aktiv ein Schaltsignal - und gegebenenfalls ein separates Anfahrsignal - geben, damit das Getriebesteuergerät 3 das Automatikgetriebe 2 automatisch in die gewünschte Vorwärts- oder Rückwärtsfahrstufe schaltet und der automatische Vorgang fortgesetzt wird. Hierzu dient jedoch - anders als im üblichen Fahrbetrieb, wenn das Lenk-Park-Assistenzsystem 6 nicht zugeschaltet ist - nicht der Wähl- oder Schalthebel 4, sondern es wird auf ein anderes, fahrzeugseitig verbautes oder zugeordnetes Element zurückgegriffen.

In Fig. 1 sind die erfindungsgemäßen unterschiedlichen alternativen oder gegebenenfalls kumulativen Möglichkeiten hinsichtlich der Einbindung solcher Elemente in die Funktionalität des Lenk-Park-Assistenzsystems 6 dargestellt. Gezeigt ist zunächst ein Pedal 10, bei dem es sich entweder um das Fahrpedal oder das Bremspedal handeln kann. Ist das Assistenzsystem 6 zugeschaltet und der automatische Einparkvorgang angestoßen, so kann über dieses Pedal das erforderliche Schaltsignal gegeben werden, nachdem das Assistenzsystem 6 das Fahrzeug bei Erfassung eines Hindernisses über die Sensoren 9 automatisch in den Stand gebremst hat. Der Fahrer muss dann lediglich das Pedal 10 kurz betätigen, um das Schaltsignal zu geben. Das Pedal 10 ist zumindest ab dem Zeitpunkt, wenn das Fahrzeug automatisch in den Stand gebremst ist, von seiner eigentlichen Funktionalität entkoppelt (im Falle des Fahrpedals, das heißt, dass über das Pedal nicht Gas gegeben werden kann) beziehungsweise ihm ist eine zusätzliche Funktion überlagert (im Falle des Bremspedals, das natürlich während des gesamten Einparkvorgangs aus Sicherheitsgründen einen Bremsvorgang auslösen lässt). Im Stand jedoch ist es ohne weiteres möglich, das Pedal 10, egal ob Fahr- oder Bremspedal, zu betätigen, um das Signal auf den Fahrzeugbus 5 zu legen, das dann zum Getriebeschalten führt. Statt einer vollständigen Entkopplung ist auch eine "Teilentkopplung" denkbar. Hierbei wird das sog. "Übertreten" des Fahrpedals zugelassen, was es ermöglicht, dass das Fahrzeug bei länger dauernder Fahrpedalbetätigung oberhalb einer vorbestimmten Verschwenkschwelle langsam beschleunigt und unter bestimmten Bedingungen und einer entsprechenden Fahrerinformation den Einparkmodus verlässt. Werden die definierten Bedingungen nicht erfüllt, verbleibt er im Einparkmodus, der aber infolge der Fahrpedalbetätigung gegebenenfalls mit etwas höherer Geschwindigkeit ausgeführt wird. Die Geschwindigkeitserhöhung kann z.B. abhängig vom Grad der Pedalverschwenkung abhängig sein, oder auch als fester Parameter eingestellt sein.

Eine Alternative besteht darin, ein beispielsweise am Lenkrad 11 befindliches Bedienelement 12, z.B. eine Taste oder ein Scrollrad, zur Gabe des Signals zu nutzen. Soll also das Schaltsignal nach Bremsen in den Stand gegeben werden, muss der Fahrer lediglich dieses Bedienelement 12 drücken, um den Getriebeschaltvorgang auszulösen.

Eine weitere Möglichkeit besteht darin, über ein Sprachsteuerungssystem 13, das natürlich ein geeignetes Sprachaufnahmesystem mit Mikrofon umfasst, das Schaltsignal zu geben. Über diese Spracheingabe wird dann wiederum seitens des Sprachsteuerungssystems 13 das entsprechende Schaltsignal auf den Fahrzeugbus zurückgegeben.

Eine weitere Möglichkeit sieht vor, über den Fahrzeugschlüssel 14 beziehungsweise ein dort vorgesehenes Bedienelement 15 wie beispielsweise eine Taste zum ÖffnenlVerriegeln des Fahrzeugs in Verbindung mit einem Zentralverriegelungssystem 16 oder zum Öffnen des Kofferraums das Signal zu geben. Dieses Signal kann auch von außerhalb des Fahrzeugs gegeben werden, das heißt, dass bei Nutzung dieser Signalgabeoption der Fahrer nicht einmal selbst im Auto sein muss, vielmehr kann er den automatischen Einparkvorgang von außerhalb des Fahrzeugs beobachten. Wird das Bedienelement 15 betätigt, so empfängt das Zentralverriegelungssystem das entsprechende Signal und gibt das Schaltsignal auf den Fahrzeugbus 5, woraufhin die Getriebeschaltung erfolgt. Selbstverständlich verarbeitet das Zentralverriegelungssystem 16 das vom Schlüssel gegebene Signal nicht als Verriegelungssignal, vielmehr sind grundsätzlich sämtliche eingebundenen Steuerungseinrichtungen beziehungsweise Fremdsysteme mit. Zuschalten des Betriebs des Assistenzsystems 6 ebenfalls in einen entsprechenden Modus geschaltet, in dem sie die von den jeweiligen Elementen gegebenen Signale ausschließlich als Schaltsignale werten und nicht als Signale innerhalb ihres eigenen Systembereich. Z.B. ist es möglich, das Bedienelement 15 erst dann zur Schaltsignalgabe zu aktivieren, wenn mittels einer Innenraumerfassung (Kamera, Sitzbelegung etc.) erkannt wurde, dass sich der Fahrer außerhalb des Fahrzeugs befindet, oder wenn erfasst wurde, dass der Schlüssel nicht im Zündschloss steckt. Für den automatischen Einparkvorgang kann auch eine eigene speziell hierfür vorgesehene Taste auf dem Zündschlüssel vorgesehen sein.

Zur Signalgabe kann grundsätzlich dem Fahrer über ein Lautsprechersystem 17, das normalerweise im Fahrzeug verbaut ist, eine entsprechende Aufforderung akustisch mitgeteilt werden, denkbar sind alternativ auch optische Signalinformationen, wie durch das Leuchtelement 18 dargestellt ist, oder alternativ ein hier nicht näher gezeigter Vibrationsalarm oder dergleichen.

Je nach Ausgestaltung kann es sodann zum Einleiten des Anfahrvorgangs nötig sein, dass der Fahrer aktiv ein Anfahrsignal geben muss, z. B. durch kurzes Betätigen des Fahrpedals oder über eine Taste am Schlüssel, wenn er außerhalb des Fahrzeugs ist. Alternativ besteht die Möglichkeit, das Schaltsignal zugleich auch als Anfahrsignal auszuwerten, z. B. wenn es mittels des Fahrpedals gegeben wird.

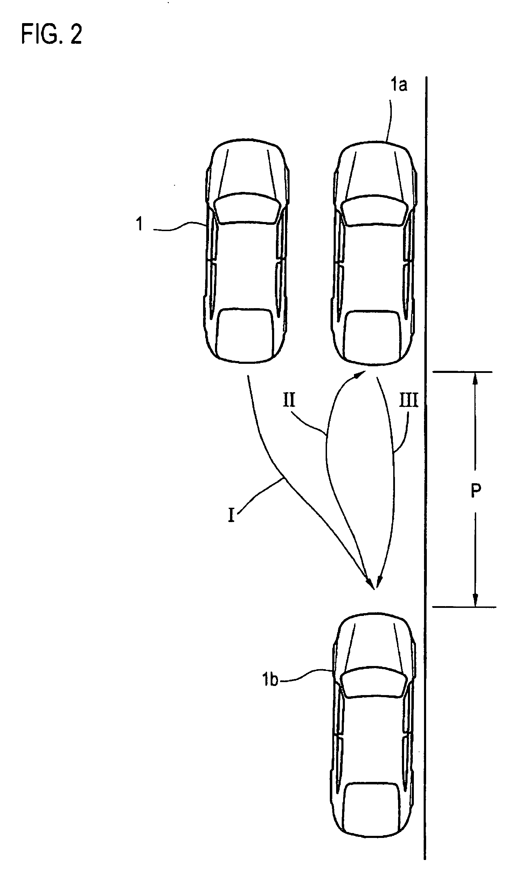

Fig. 2 zeigt in Form einer Prinzipdarstellung eine typische Einparksituation. Das erfindungsgemäße Kraftfahrzeug 1 soll in eine Parklücke P automatisch eingeparkt werden, die über zwei andere Kraftfahrzeuge 1 a und 1b in ihrer Länge begrenzt ist. Das Kraftfahrzeug 1 fährt zunächst üblicher Weise neben das Kraftfahrzeug 1a, wobei die Sensoren 9 hierbei, wenn zuvor das Assistenzsystem 6 bereits zugeschaltet wurde, beispielsweise bereits die Parklücke P vermessen haben. Unabhängig davon beginnt nun, beispielsweise nachdem der Fahrer das Assistenzsystem 6 über das Bedienelement 8 aktiviert hat, der automatische Einparkbetrieb. Hierzu wird über das Assistenzsystem 6 zunächst beispielsweise automatisch die Rückwärtsfahrstufe R getriebeseitig angesteuert, wonach das Fahrzeug automatisch über das Assitenzsystem 6 entlang der Kurve I rückwärts bewegt wird. Alternativ kann die R-Stufe auch vom Fahrer einzulegen sein. Hierbei ist beispielsweise das Fahrpedal seiner Funktion entkoppelt, das heißt, bei Betätigen des Fahrpedals (Gaspedal) kann die Geschwindigkeit nicht verändert werden. Lediglich das Bremspedal ist aktiv, so dass der Fahrer jederzeit in den Bewegungsvorgang eingreifen kann. Alternativ wäre auch eine Teilentkopplung des Fahrpedals möglich, die ein "Übertreten" und daraus folgend ein Verlassen des Einparkmodus, wenn die hierfür definierten Randbedingungen erfüllt sind. Ist dies nicht der Fall, kann die z.B. um einen vorbestimmten Schwellwert erfolgende Betätigung des Fahrpedals als Fahrerwunsch interpretiert werden, den Einparkvorgang mit etwas höherer Geschwindigkeit vorzunehmen.

Mit zunehmende Annäherung an das Fahrzeug 1b schlagen die Sensoren 9 an, in Abhängigkeit der hierüber erfassten Distanz zwischen dem Kraftfahrzeug 1 und dem Kraftfahrzeug 1b wird das Fahrzeug über das Assistenzsystem 6 sachte in den Stand gebremst. Die erreichte Position am Ende der Fahrkurve 1 ist noch nicht optimal, das heißt, das Fahrzeug befindet sich noch nicht in einer akzeptablen Parkposition innerhalb der Parklücke P. Infolgedessen ist es erforderlich, eine Fahrtrichtungsänderung vorzunehmen, um das Fahrzeug entlang der Fahrkurve II weiterzuführen. Hierzu ist eine Fahrerwunscherfassung erforderlich, das heißt, der Fahrer muss ein Signal geben, damit das Getriebe 2 automatisch in eine Vorwärtsfahrstufe geschaltet wird. Dies erfolgt beim erfindungsgemäßen Kraftfahrzeug bei aktivem Assistenzsystem 6 nicht über den Schalt- oder Wählhebel 4, sondern beispielsweise über das Pedal 10, bei dem es sich wie beschrieben entweder um das Fahr- oder Bremspedal handeln kann. Mit Erreichen der Endposition am Ende der Fahrkurve I wird dem Fahrer über das Lautsprechersystem 17 signalisiert, dass er ein Fahrstufenwechselsignal zu geben hat. Hierzu weiß der Fahrer oder wird ihm mitgeteilt, dass das Fahr- oder Bremspedal beispielsweise für zwei Sekunden zu betätigen ist. Dies führ dazu, nachdem die Pedalbetätigung erfasst wird, dass auf den Fahrzeugbus 5 ein entsprechendes Getriebeschaltsignal gegeben wird. Wird das Bremspedal in diesen Ablauf eingebunden, so wird der Einparkvorgang - gegebenenfalls nach Gabe eines separaten Anfahrsignals über z. B. das Fahrpedal - automatisch fortgesetzt, sobald das Bremspedal wieder gelöst ist. Liegt das Schaltsignal vor, wird das Getriebe geschaltet.

Alternativ dazu besteht wie bereits beschrieben die Möglichkeit, dieses Schaltsignal auch über das Bedienelement 12 am Lenkrad 11 zu geben oder über das Sprachsteuerungssystem 13 oder über das schlüsselseitige Bedienelement 15, je nachdem, welches dieser Elemente in diesem erfindungsgemäßen Kraftfahrzeug im Assistenzsystem 6 eingebunden ist. Es liegt auf der Hand, dass nur eines der beschriebenen Elemente eingebunden werden muss, wenngleich es denkbar wäre, beispielsweise eines der im Fahrzeug befindlichen Elemente (Pedal 10, Bedienelement 12, Sprachsteuerungseinrichtung 13) und das Bedienelement 15 des Schlüssels 14 einzubinden, um die Möglichkeit zu geben, entweder im Fahrzeug sitzend das Signal zu geben, oder außerhalb des Fahrzeugs über das Bedienelement 15 das Schaltsignal zu erzeugen.

Sobald also das Schaltsignal erzeugt wurde, wird der automatische Einparkvorgang längs der Kurve 11 fortgesetzt. Das Fahrzeug fährt nun vorwärts und befindet sich am Ende der Fahrkurve 11 wieder im Stand, das heißt, die Sensoren 9 haben bei zunehmender Annäherung an das Kraftfahrzeug 1 die Annäherung erfasst und das Assistenzsystem 6 hat auch das Fahrzeug 1 erneut sachte in den Stand gebremst. Entweder kann nun der Einparkvorgang abgeschlossen sein, wenn das Fahrzeug seine optimale Position erreicht hat, im gezeigten Beispiel sei jedoch angenommen, dass ein weiterer Rangiervorgang erforderlich ist und das Fahrzeug längs der Einparkkurve III rückwärts zu fahren ist. Benötigt wird also erneut ein Schaltsignal, um das Getriebe 2 wieder in die R-Fahrstufe zu schalten. Der Fahrer wird erneut über das Lautsprechersystem 17 zur Gabe des Schaltsignals aufgefordert, er betätigt beispielsweise erneut das Pedal 10 oder das Bedienelement 12 oder gibt eine Spracheingabe ein oder betätigt das Bedienelement 15, um das Schaltsignal zu geben. Nach dem automatischen Einlegen der Rückwärtsfahrstufe fährt das Fahrzeug - gegebenenfalls nach erneuter Gabe eines separaten Anfahrsignals z. B. über das Fahrpedal - automatisch über das Assistenzsystem geführt rückwärts, bis die optimale Parkposition erreicht ist. Diese kann beispielsweise dem Fahrer optisch oder akustisch signalisiert werden, woraufhin er entweder aktiv selbst die P-Fahrstufe, also die Parkstufe über den Wählhebel 4 einlegt. Denkbar ist es aber auch, diese Parkstufe automatisch über das Assistenzsystem 6 einzulegen, wenn der Einparkvorgang abgeschlossen ist beziehungsweise um den Einparkvorgang endgültig abzuschließen. Über das automatische Einlegen der Parkstufe kann dem Fahrer beispielsweise optisch oder akustisch signalisiert werden, beispielsweise über eine entsprechende Ansage oder optische Darstellung im Fahrzeug, oder über die Blinkleuchten an der Fahrzeugaußenseite, wenn der Fahrer außerhalb des Fahrzeugs steht und das Schaltsignal über das schlüsselseitige Bedienelement 15 gegeben hat.

Zusammengefasst kann das erfindungsgemäße Vorgehen wie folgt ablaufen:
1. Fahreraktion zur Einleitung des automatischen Einparkvorgangs (z. B. Tastendruck)
2. Optional: Einmalig manuelles Einlegen des Rückwärtsganges
3. Kurze Betätigung des Fahrpedals zur Gabe des Anfahrsignals
4. Fahrzeug setzt sich in Bewegung und lenkt selbständig bis es sich an ein Hindernis nähert. Entfernt sich das Hindernis, fährt es weiter. Wenn nicht, bleibt das Fahrzeug stehen
5. Quittierung (Handlung) des Fahrers zum Fahrtrichtungswechsel durch Gabe des Schaltsignals z. B. durch Bremspedal - optional mit weiterer Fahreraktion, z. B. Fahrpedalbetätigung - zum Inbewegungsetzen bzw. Fahrzeug setzt sich alleine wieder in Bewegung
6. Einparkvorgang zu Ende, dann P einlegen, sonst zu 4.

## Patentansprüche

1. Kraftfahrzeug umfassend ein elektronisch schaltbares Automatikgetriebe sowie ein Park-Lenk-Assistenzsystem zum Unterstützen eines Einparkvorgangs, umfassend eine Steuerungseinrichtung und einen oder mehrere das Fahrzeugumfeld erfassende Sensoren, mittels welchem Assistenzsystem das Fahrzeug bei einer über die Sensoren erfassten Annäherung an ein Hindernis automatisch in den Stand bremsbar ist,
**dadurch gekennzeichnet,**
**dass** während eines über das Assistenzsystem (6) unterstützten Einparkvorgangs das Signal zum Schalten des Automatikgetriebes (2) von einer Vorwärtsfahrstufe in eine Rückwärtsfahrstufe oder umgekehrt nach dem automatischen Bremsen in den Stand über das Fahr- oder Bremspedal (10), über eine Spracheingabe in ein Sprachsteuerungssystem (13) oder durch Betätigen eines lenkrad- oder armaturenbrettseitigen Bedienelements (12, 15) gebbar ist, woraufhin nach Einlegen der Fahrstufe der automatische Einparkvorgang fortgesetzt wird.

2. Kraftfahrzeug nach Anspruch 1, wobei das Schaltsignal über das Fahrpedal gebbar ist,
**dadurch gekennzeichnet,**
**dass** das Fahrpedal (10) zur Gabe des Schaltsignals um einen vorbestimmten Wegabschnitt zu bewegen und/oder ein vorbestimmtes Zeitintervall aus seiner Neutralstellung herausbewegt zu halten ist.

3. Kraftfahrzeug nach Anspruch 1 wobei das Schaltsignal über das Bremspedal gebbar ist,
**dadurch gekennzeichnet,**
**dass** das Bremspedal (10) zur Gabe des Schaltsignals um einen vorbestimmten Wegabschnitt zu bewegen und/oder ein vorbestimmtes Zeitintervall aus seiner Neutralstellung herausbewegt zu halten ist, wobei der Einparkvorgang nach Lösen des Bremspedals fortgesetzt wird.

4. Kraftfahrzeug nach Anspruch 1, wobei das Schaltsignal über eine Spracheingabe in ein Sprachsteuerungssystem gebbar ist,
**dadurch gekennzeichnet,**
**dass** das Sprachsteuerungssystem (13) mit Inbetriebnahme des Assistenzsystems (6) automatisch aktivierbar ist.

5. Kraftfahrzeug nach Anspruch 1, wobei das Schaltsignal über ein lenkrad- oder armaturenbrettseitiges Bedienelement gebbar ist,
**dadurch gekennzeichnet,**
**dass** das Bedienelement (12) eine Taste, ein Knopf, ein Scrollrad oder ein Berührungsfeld ist, das in seiner Funktionalität mit Inbetriebnahme des Assistenzsystems (6) zur Signalgabe umgeschaltet wird.

6. Kraftfahrzeug nach einem der vorangehenden Ansprüche,
**dadurch gekennzeichnet,**
**dass** zum Anfahren ein fahrerseitig zu gebendes separates Anfahrsignal erforderlich ist, oder dass das Schaltsignal zugleich als Anfahrsignal dient.

7. Kraftfahrzeug nach einem der vorangehenden Ansprüche,
**dadurch gekennzeichnet,**
**dass** ein optisches (18) und/oder akustisches (17) und/oder haptisches Informationssignal, das zur Gabe eines Schaltsignals auffordert, automatisch mit dem Bremsen in den Stand bei noch nicht abgeschlossenem Einparkvorgang gebbar ist.

8. Kraftfahrzeug nach einem der vorangehenden Ansprüche,
**dadurch gekennzeichnet,**
**dass** nach Beendigung des Einparkvorgangs seitens des Assistenzsystems (6) automatisch, gegebenenfalls nach vorheriger Gabe eines Bestätigungssignals durch den Fahrer, ein Schaltsignal zum Einlegen der Parkstufe erzeugbar ist.

9. Kraftfahrzeug nach Anspruch 8,
**dadurch gekennzeichnet,**
**dass** das Schaltsignal in Abhängigkeit einer vorherigen Überprüfung des Vorhandenseins des Zündschlüssels (14) im Fahrzeug (1) und/oder einer Innenraumüberwachung gebbar ist.

10. Kraftfahrzeug nach Anspruch 8 oder 9,
**dadurch gekennzeichnet,**
**dass** nach automatischem Einlegen der Parkstufe ein die anzeigendes optisches und/oder akustisches Informationssignal gebbar ist.

## Claims

1. Motor vehicle comprising an electronically switchable automatic gearbox and a parking steering assistance system for assisting a parking process, comprising a control means and one or more sensors detecting the surroundings of the vehicle, by means of which assistance system the vehicle can be braked to a standstill automatically when the sensors detect that the vehicle is approaching an obstacle, **characterised in that**, during a parking process assisted via the assistance system (6), the signal to switch the automatic gearbox (2) from a forward driving stage into a reverse driving stage or vice versa after automatic braking to a standstill can be given via the accelerator or brake pedal (10), by inputting speech into a speech control system (13) or by actuating a steering-wheel- or dashboard-side control element (12, 15), whereupon the automatic parking process is continued after engagement of the driving stage.

2. Motor vehicle according to claim 1, it being possible to give the switch signal via the accelerator pedal, **characterised in that** to give the switch signal the accelerator pedal (10) is to be moved by a predetermined path portion and/or is to be held moved out of its neutral position for a predetermined time interval.

3. Motor vehicle according to claim 1, it being possible to give the switch signal via the brake pedal, **characterised in that** to give the switch signal the brake pedal (10) is to be moved by a predetermined path portion and/or is to be held moved out of its neutral position for a predetermined time interval, the parking process being continued after release of the brake pedal.

4. Motor vehicle according to claim 1, it being possible to give the switch signal by inputting speech into a speech control system, **characterised in that** the speech control system (13) can be activated automatically when the assistance system (6) is put into operation.

5. Motor vehicle according to claim 1, it being possible to give the switch signal by actuating a steering-wheel- or dashboard-side control element, **characterised in that** the control element (12) is a button, a knob, a scroll wheel or a touch pad, the functionality of which is switched to signalling when the assistance system (6) is put into operation.

6. Motor vehicle according to any of the preceding claims, **characterised in that** to start driving a separate starting signal is required which is to be given by the driver, or **in that** the switch signal simultaneously serves as a starting signal.

7. Motor vehicle according to any of the preceding claims, **characterised in that** an optical (18) and/or acoustic (17) and/or haptic information signal, which is a prompt to give a switch signal, can be given automatically when braking to a standstill in the case of a parking process which is not yet complete.

8. Motor vehicle according to any of the preceding claims, **characterised in that**, after completion of the parking process, a switch signal for engaging the parking stage can be produced automatically by the assistance system (6), optionally after a confirmation signal has previously been given by the driver.

9. Motor vehicle according to claim 8, **characterised in that** the switch signal can be given on the basis of a preceding check for the presence of the ignition key (14) in the vehicle (1) and/or on the basis of passenger compartment monitoring.

10. Motor vehicle according to either claim 8 or claim 9, **characterised in that**, after automatic engagement of the parking stage, an optical and/or acoustic information signal indicative thereof can be given.

## Revendications

1. Véhicule automobile comprenant une commande automatique à déclenchement électronique ainsi qu'un système d'assistance au guidage de stationnement pour soutenir une opération de stationnement, comprenant un dispositif de commande et un ou plusieurs capteurs détectant l'environnement du véhicule, au moyen duquel système d'assistance le véhicule peut être freiné automatiquement à l'emplacement lorsqu'il s'approche d'un obstacle qui a été détecté par les capteurs,
**caractérisé en ce que**,
au cours d'une opération de stationnement soutenue par le système d'assistance (6), le signal permettant de commuter la commande automatique (2) d'une étape de marche avant à une étape de marche arrière ou vice versa après freinage automatique à l'emplacement peut être délivré via la pédale d'accélérateur ou la pédale de frein (10), via une saisie vocale dans un système de commande vocale (13) ou par commande d'un élément de service (12, 15) côté volant de direction ou tableau de bord, moyennant quoi, après recours à l'étape de marche, l'opération de stationnement automatique est poursuivie.

2. Véhicule automobile selon la revendication 1, dans lequel le signal de commutation peut être délivré via la pédale d'accélérateur,
**caractérisé en ce que**
la pédale d'accélérateur (10) permettant de délivrer le signal de commutation doit être déplacée d'une section de course prédéterminée et/ou maintenue d'un intervalle de temps prédéterminé déplacé de sa position neutre.

3. Véhicule automobile selon la revendication 1, dans lequel le signal de commutation peut être délivré via la pédale de frein,
**caractérisé en ce que**
la pédale de frein (10) permettant de délivrer le signal de commutation doit être déplacée d'une section de course prédéterminée et/ou maintenue d'un intervalle de temps prédéterminé déplacée de sa position neutre, dans lequel l'opération de stationnement est poursuivie après desserrage de la pédale de frein.

4. Véhicule automobile selon la revendication 1, dans lequel le signal de commutation peut être délivré via une saisie vocale dans un système de commande vocale,
**caractérisé en ce que**
le système de commande vocale (13) peut être activé automatiquement avec la mise en marche du système d'assistance (6).

5. Véhicule automobile selon la revendication 1, dans lequel le signal de commutation peut être délivré via un élément de service côté volant de direction ou tableau de bord,
**caractérisé en ce que**
l'élément de service (12) est une touche de clavier, un bouton, une roulette de défilement ou un champ de contact qui est commuté (e) dans sa fonctionnalité avec la mise en marche du système d'assistance (6) pour la délivrance d'un signal.

6. Véhicule automobile selon l'une quelconque des revendications précédentes,
**caractérisé en ce que**,
pour le démarrage, un signal de démarrage séparé à délivrer côté conducteur est nécessaire ou bien le signal de commutation sert simultanément de signal de démarrage.

7. Véhicule selon l'une quelconque des revendications précédentes,
**caractérisé en ce que**
un signal d'information optique (18) et/ou acoustique (17) et/ou haptique, qui demande la délivrance d'un signal de commutation, est délivré automatiquement avec le freinage à l'emplacement dans le cas d'une opération de stationnement qui n'est pas encore terminée.

8. Véhicule automobile selon l'une quelconque des revendications précédentes,
**caractérisé en ce que**,
après achèvement de l'opération de stationnement de la part du système d'assistance (6), un signal de commutation peut être produit pour recourir à l'étape de stationnement de manière automatique, éventuellement après délivrance préalable d'un signal de confirmation par le conducteur.

9. Véhicule automobile selon la revendication 8,
**caractérisé en ce que**
le signal de commutation peut être délivré en fonction d'un contrôle préalable de la présence de la clé de contact (14) dans le véhicule (1) et/ou d'un contrôle de l'espace interne.

10. Véhicule automobile selon la revendication 8 ou la revendication 9,
**caractérisé en ce que**,
après recours automatique à l'étape de stationnement, un signal d'information optique et/ou acoustique indiquant celle-ci peut être délivré.
